# EUROPEAN PATENT APPLICATION

(11) **EP 4 793 414 A1**
(43) Date of publication of application: **19.08.2026**
(21) Application number: 24900610.7
(22) Date of filing: 03.12.2024
(51) Int. Cl.: D03D 1/02, B60R 21/16, D03D 15/283, D06M 15/507

(54) **BASE FABRIC FOR AIRBAG**

(30) Priority: 06.12.2023 JP 2023206175
(71) Applicant: Seiren Co., Ltd., Fukui-shi Fukui 918-8560 (JP)
(72) Inventor: HATANAKA, Yoshiki, Fukui-shi, Fukui 918-8560 (JP)
(74) Representative: Dolleymores
(86) International application number: PCT/JP2024/042701
(87) International publication number: WO 2025/121316

(57) **Abstract**

The airbag base fabric of an embodiment is an airbag base fabric which has a base fabric main body and a resin layer provided on at least one surface of the base fabric main body and which is characterized in that the base fabric main body is formed with polyethylene terephthalate fibers, that the resin layer is formed with a polyester resin, and that the resin layer is provided in such a manner that the amount of the polyester resin is 4.0 g/m² or more and less than 10.0 g/m² on the surface of the base fabric main body and provided in a state in which the fibers are not exposed on the surface of the resin layer side.

## Description

### Technical Field

The present invention relates to an airbag base fabric.

### Background Art

As described in PTL 1, for example, an airbag base fabric has a base fabric main body such as a woven fabric and a resin layer provided on at least one surface of the base fabric main body. Because the resin layer is provided, the air permeation amount of the airbag base fabric becomes small, and the shape of the inflated airbag is maintained. Moreover, because the resin layer is provided, the base fabric main body is not easily frayed.

In a general airbag base fabric of the related art, the base fabric main body is a woven fabric of nylon yarn or polyester yarn, and the resin layer is a layer of a silicone resin.

### Citation List

### Patent Literature

PTL 1: JPH11-293541A

### Summary of Invention

### Technical Problem

Here, a general airbag base fabric of the related art has a problem of difficulty of recycling because the materials of the base fabric main body and the resin layer are different as stated above.

Thus, an object of the invention is to provide an airbag base fabric which is easily recycled.

### Solution to Problem

The invention includes the embodiments shown below.
[1] An airbag base fabric having a base fabric main body and a resin layer provided on at least one surface of the base fabric main body in which the base fabric main body is formed with polyethylene terephthalate fibers, the resin layer is formed with a polyester resin, and the resin layer is provided in such a manner that the amount of the polyester resin is 4.0 g/m² or more and less than 10.0 g/m² on the surface of the base fabric main body and provided in a state in which the fibers are not exposed on the surface of the resin layer side.
[2] The airbag base fabric according to [1] in which the air permeation amount at a differential pressure of 20 kPa is 0.01 L/(cm²·min) or less.
[3] The airbag base fabric according to [1] or [2] in which the bending resistance is 7 N or less.
[4] The airbag base fabric according to any of [1] to [3] in which the melting point of the polyester resin forming the resin layer is lower than the melting point of the polyethylene terephthalate fibers forming the base fabric main body.
[5] The airbag base fabric according to any of [1] to [4] in which the base fabric main body has been subjected to water-repellent process.
[6] The airbag base fabric according to any of [1] to [5] in which the ratio of the weight of the polyester resin that has penetrated into the base fabric main body to the weight of the polyester resin applied to the base fabric main body is less than 70%.
[7] The airbag base fabric according to any of [1] to [6] in which the base fabric main body is a plain weave fabric.
[8] The airbag base fabric according to any of [1] to [7] in which the fineness of the yarn of the polyethylene terephthalate fibers forming the base fabric main body is 280 to 560 dtex.

### Advantageous Effects of Invention

The airbag base fabric of the embodiment is easily recycled because the base fabric main body is formed with polyethylene terephthalate fibers and because the resin layer is formed with a polyester resin.

### Brief Description of Drawings

[FIG. 1] A cross-sectional view of an airbag base fabric.
[FIG. 2] A figure illustrating yarn and a resin layer in a cross section of an airbag base fabric.
[FIG. 3] A cross-section picture of an airbag base fabric.
[FIG. 4] A picture of the airbag base fabric of Example 1 taken from the resin layer side.
[FIG. 5] A picture of the airbag base fabric of Example 3 taken from the resin layer side.
[FIG. 6] A cross-section picture of the airbag base fabric of Example 3.
[FIG. 7] A picture of the airbag base fabric of Comparative Example 2 taken from the resin layer side.
[FIG. 8] A picture of the airbag base fabric of Comparative Example 4 taken from the resin layer side.
[FIG. 9] A figure illustrating a raw fabric air permeation amount measurement apparatus.

### Description of Embodiments

Embodiments are explained based on the drawings. In this regard, the embodiments explained below are merely examples, and those appropriately changed in the scope which does not depart from the gist of the invention are included in the scope of the invention.

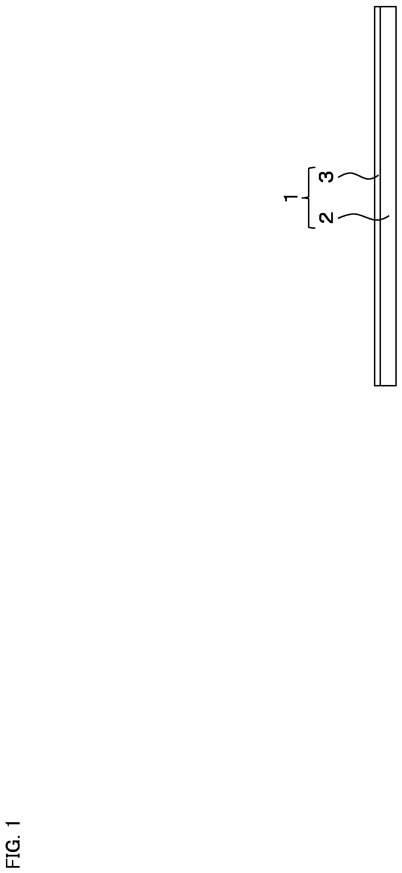

As illustrated in FIG. 1, an airbag base fabric 1 of an embodiment has a base fabric main body 2 and a resin layer 3 provided on one surface of the base fabric main body 2.

The base fabric main body 2 is formed with polyethylene terephthalate fibers. In view of the strength, the durability, and the cost required for an airbag, polyethylene terephthalate fibers are excellent as the fibers of the base fabric main body 2. One kind or more of various additives may be added to the polyethylene terephthalate fibers. Here, the various additives include a heat-resistant stabilizer, an antioxidant, a light-resistant stabilizer, an aging inhibitor, a lubricant, a smoothing agent, a pigment, a water repellent, a masking agent, a gloss imparting agent, a flame retardant, a plasticizer, and the like. Yarn of polyethylene terephthalate fibers may be polyester yarn.

A more specific example of the base fabric main body 2 is a woven fabric, a knitted fabric, or a nonwoven fabric of polyester yarn. The woven fabric may be, for example, a woven fabric of any structure of a plain weave, a twill weave, a satin weave, and the like. Moreover, the knitted fabric may be, for example, any knitted fabric of weft knitting, circular knitting, warp knitting, or the like. Of the woven fabric, the knitted fabric, and the nonwoven fabric, a fabric which can secure the strength as much as possible is preferable, and for example, the woven fabric is preferable. Moreover, of the woven fabrics, a woven fabric in which the performance such as the strength is as even as possible in the warp and weft directions is preferable, and for example, a plain weave fabric is preferable.

The fineness of the yarn (for example, polyester yarn) forming the base fabric main body 2 is preferably 280 to 560 dtex and further preferably 300 to 470 dtex. This ensures the strength of the base fabric main body 2 and can achieve a thinness of the base fabric main body 2 which allows the base fabric main body 2 to become compact when being folded. In particular, when the base fabric main body 2 is a woven fabric or a knitted fabric, the fineness of the yarn forming the base fabric main body 2 is preferably in the above range. Moreover, the polyester yarn is a filament yarn having a number of filaments of, for example, 80 to 110.

Resins which are believed to be applicable to the base fabric main body 2 include silicone, acrylic, polyurethane, polyolefin, phenolic, and other resins, but the resin layer 3 of the embodiment is formed with a polyester resin. The polyester resin refers to a long-chain synthetic polymer in which the bonds of the monomers are mainly ester bonds. Polyester includes polyethylene terephthalate.

The melting point of the polyester resin forming the resin layer 3 is lower than the melting point of the polyethylene terephthalate fibers forming the base fabric main body 2. As a result, the energy required for melting the airbag base fabric 1 for recycling does not become large compared to that of a case in which a base fabric main body 2 having no resin layer 3 is melted. Thus, the airbag base fabric 1 is suitable for recycling. Moreover, the polyethylene terephthalate fibers forming the base fabric main body 2 are not easily thermally deteriorated.

A specific temperature of the melting point of the polyester resin forming the resin layer 3 is, for example, 80°C or higher and 250°C or lower (which should be lower than the melting point of the polyethylene terephthalate fibers forming the base fabric main body 2). When the melting point is 80°C or higher, the polyester resin does not easily melt even in a hot vehicle, and the performance of the airbag is not easily deteriorated.

The amount of the polyester resin forming the resin layer 3 is 4.0 g/m² or more and less than 10.0 g/m². The base fabric main body 2 is completely covered with the resin layer 3, and the fibers of the base fabric main body 2 are not exposed from the resin layer 3. Accordingly, when a person sees the airbag base fabric 1 from the resin layer 3 side, the person cannot perceive the fibers of the base fabric main body 2.

The resin layer 3 is provided by coating the base fabric main body 2 with a polyester resin. The base fabric main body 2 before the coating with the polyester resin may be subjected to water-repellent process.

When the base fabric main body 2 is not subjected to water-repellent process, the viscosity of the polyester resin forming the resin layer 3 is preferably 25000 to 50000 mPa·s. When the base fabric main body 2 is subjected to water-repellent process, the viscosity of the polyester resin forming the resin layer 3 is preferably 5000 to 50000 mPa·s. When the viscosity is high to some extent, the polyester resin does not easily penetrate the base fabric main body 2, and the resin layer 3 can easily cover the base fabric main body 2. Moreover, when the viscosity is 50000 mPa·s or less, an even resin layer 3 is easily formed through coating.

In this regard, whether the base fabric main body 2 has been subjected to water-repellent process can be checked through water repellency test of the surface of the airbag base fabric 1 without the resin layer 3.

Regardless of whether the base fabric main body 2 has been subjected to water-repellent process, the penetration rate of the polyester resin to the base fabric main body 2 is preferably less than 70%. The penetration rate of the polyester resin to the base fabric main body 2 refers to the ratio of the weight of the polyester resin that has penetrated into the base fabric main body 2 to the weight of the polyester resin applied (coated) to the base fabric main body 2 in a unit area. The penetration rate is calculated by the following equation.$R = \frac{\left(W-T\times 1.2\right)}{W} \times 100$

Here, R is the penetration rate (%) of the polyester resin to the base fabric main body 2; W is the weight (g/m²) of the polyester resin applied (coated) per unit area of the base fabric main body 2; and T is the average thickness (µm) of the resin layer 3 on the airbag base fabric 1 (namely, the layer of the polyester resin which has not penetrated the base fabric main body 2 and which remains on the surface of the base fabric main body 2).

The weight W of the polyester resin applied (coated) per unit area of the base fabric main body 2 can be determined as the difference between the weight of the airbag base fabric 1 per unit area and the weight of the base fabric main body 2 which remains after dissolving and removing the polyester resin with a solvent such as toluene from the airbag base fabric 1.

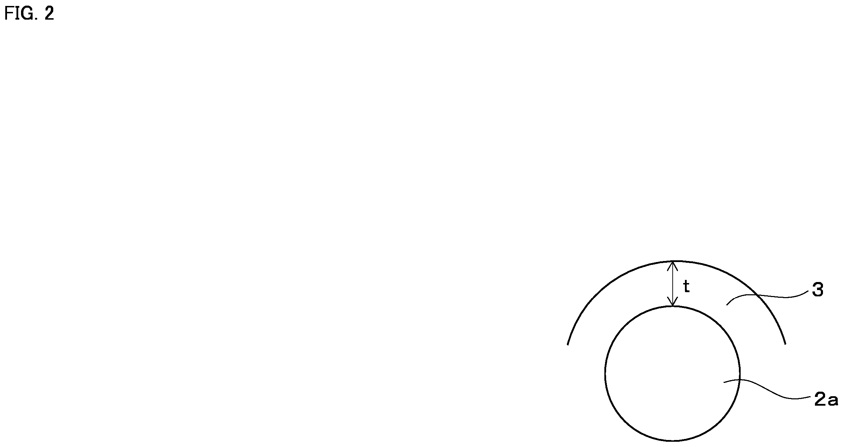

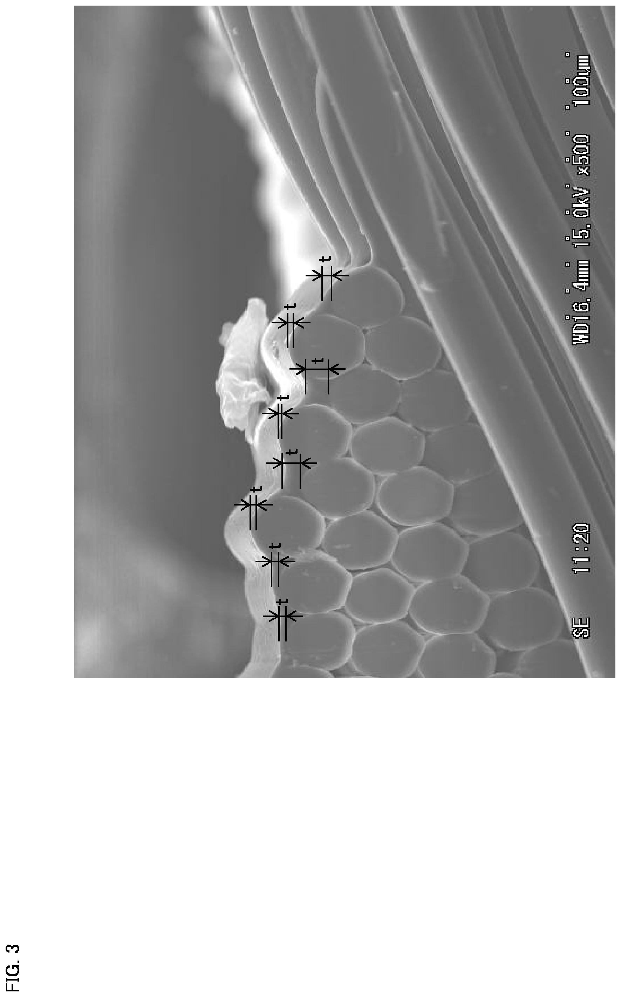

Moreover, the average thickness T of the resin layer 3 is an average value of the thicknesses of the resin layer 3 at a plurality of points (preferably eight points or more) on a cross-section picture of the airbag base fabric 1. As shown in FIG. 2 and FIG. 3, the thickness t of the resin layer 3 at each measurement point refers to the distance in the vertical direction from the vertex of yarn 2a which forms the base fabric main body 2 and which is in contact with the resin layer 3 to the surface of the resin layer 3, in a cross-section picture in which the direction perpendicular to the surface of the airbag base fabric 1 is the vertical direction.

Moreover, 1.2 is a numerical value showing the density (g/cm³) of the polyester resin. The actual density of the polyester resin slightly varies with the kind and falls in the range of 1.1 to 1.3, but the average value thereof is 1.2, and the density of any polyester resin does not largely differ from 1.2. Thus, for calculation of the penetration rate, the density of the polyester resin is regarded as 1.2.

When the penetration rate of the polyester resin to the base fabric main body 2 is less than 70%, the base fabric main body 2 does not easily become hard, a resin layer 3 having a sufficient thickness is formed, and the airbag base fabric 1 is hardly air permeable.

Moreover, the penetration rate of the polyester resin to the base fabric main body 2 is preferably 3% or more. When the penetration rate is 3% or more, the resin layer 3 does not easily peel off from the base fabric main body 2.

The air permeation amount at a differential pressure of 20 kPa of the airbag base fabric 1 is 0.01 L/(cm²·min) or less. Here, the air permeation amount at a differential pressure of 20 kPa refers to the air permeation amount of the airbag base fabric 1 when the differential pressure between one side and the other side of the airbag base fabric 1 is 20 kPa. A specific measurement method of the air permeation amount will be described below.

Moreover, the bending resistance of the airbag base fabric 1 is 7 N or less. As the bending resistance becomes smaller, it is considered that the airbag base fabric 1 is flexible. To adjust the bending resistance to 7 N or less, it is effective to cover the base fabric main body 2 with the resin layer 3 formed with a polyester resin, but it is also effective to adjust the glass transition temperature or the like of the polyester resin. A specific measurement method of the bending resistance will be described below.

To produce such an airbag base fabric 1, the base fabric main body 2 is prepared first. Next, an operator coat one surface of the base fabric main body 2 with a polyester resin and thus provides the resin layer 3. The coating may be conducted manually or using a coating device. Once the coated polyester resin dries, the airbag base fabric 1 is complete.

In this regard, when the base fabric main body 2 is subjected to water-repellent process, the operator conducts the water-repellent process before coating with the polyester resin. The water-repellent process is conducted by impregnating the base fabric main body 2 with any water repellent of a fluorine-based, silicone-based, hydrocarbon-based, and other water repellents and then drying the base fabric main body 2.

Thus completed airbag base fabric 1 is cut into a predetermined shape, joined by means of sewing, adhesion, or the like and joined with a reinforcing fabric in accordance with the need to obtain an airbag. The yarn used for sewing, the adhesive used for adhesion, and the reinforcing fabric are also preferably made of polyester. Examples of the airbag include an airbag for a driver's seat, an airbag for a front passenger seat, a side airbag, and a side-curtain airbag.

Next, the effects of the embodiment are explained. First, because the base fabric main body 2 is formed with polyethylene terephthalate fibers and because the resin layer 3 is formed with a polyester resin, the airbag base fabric 1 of the embodiment is composed of the same material or materials which can be considered to be the same and thus can be easily recycled.

Moreover, because the amount of the polyester resin in the resin layer 3 is less than 10.0 g/m², which is low, the airbag base fabric 1 is flexible and is easily folded. Furthermore, because the amount of the polyester resin is low, the airbag base fabric 1 is light. In addition, because the amount of the polyester resin in the resin layer 3 is 4.0 g/m² or more, the fibers of the base fabric main body 2 are not exposed from the resin layer 3.

Moreover, because the resin layer 3 is provided in a state in which the fibers of the base fabric main body 2 are not exposed from the resin layer 3, the airbag base fabric 1 is hardly air permeable.

Furthermore, even though the amount of the polyester resin in the resin layer 3 is less than 10.0 g/m², which is low, the fibers of the base fabric main body 2 are not exposed from the resin layer 3, and this means that the polyester resin has hardly penetrated the base fabric main body 2. Accordingly, the airbag base fabric 1 is flexible.

Because the airbag base fabric 1 is flexible and is hardly air permeable as described above, the airbag produced from the airbag base fabric 1 can be folded up small for storage and maintains the shape when being inflated.

Moreover, because the air permeation amount at a differential pressure of 20 kPa of the airbag base fabric 1 is 0.01 L/(cm²·min) or less, the airbag produced from the airbag base fabric 1 is easily inflated and maintains the shape when being inflated.

Furthermore, because the bending resistance of the airbag base fabric 1 is 7 N or less, the airbag produced from the airbag base fabric 1 is easily folded up small for storage.

In addition, when the base fabric main body 2 is subjected to water-repellent process, the polyester resin particularly hardly penetrates the base fabric main body 2, and the airbag base fabric 1 becomes particularly flexible. On the other hand, when the base fabric main body 2 is not subjected to water-repellent process, the step of water-repellent process is not required, and the productivity of the airbag base fabric 1 improves. Moreover, when the base fabric main body 2 is not subjected to water-repellent process, foreign substances are not contained in the material of the airbag base fabric 1, and recycling is particularly easy.

Next, Examples and Comparative Examples are explained. In the Examples and the Comparative Examples, an operator produced airbag base fabrics each having a resin layer provided on a base fabric main body and measured the air permeation amounts and the bending resistances under the conditions described below.

### (Example 1)

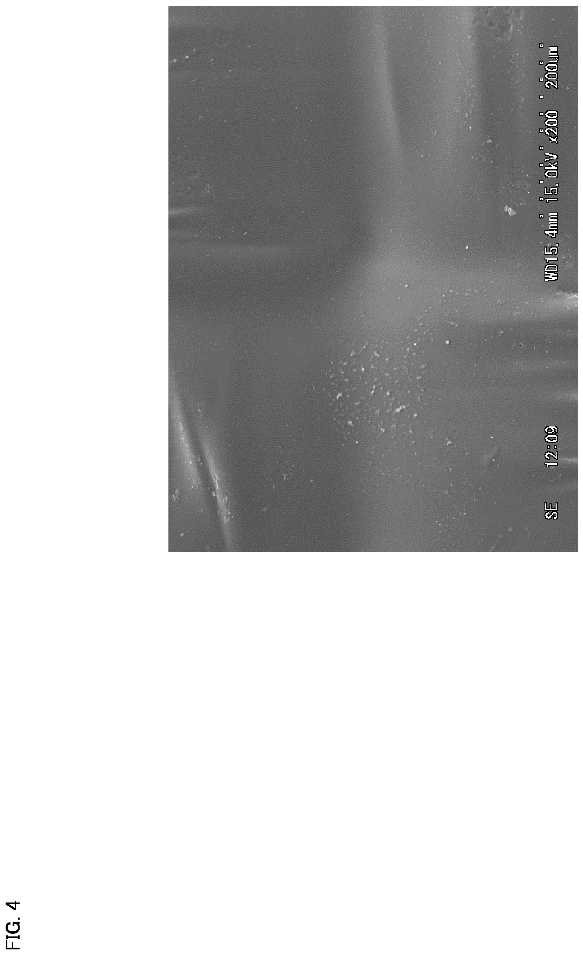

An operator placed a base fabric main body on a urethane bed (stage) and coated the top surface of the base fabric main body with a polyester resin having a viscosity of 30000 mPa·s with a stainless steel knife having a sharp blade to thus obtain an airbag base fabric having a resin-coating amount of 4.6 g/m². The airbag base fabric after the coating was thermally treated at 150°C for 60 seconds using a pin tenter dryer. The surface of the airbag base fabric of the resin layer side after the thermal treatment was as shown in FIG. 4, and exposure of the fibers forming the base fabric main body from the resin layer was not observed.

### (Example 2)

An operator placed a base fabric main body on a urethane bed (stage) and coated the top surface of the base fabric main body with a polyester resin having a viscosity of 30000 mPa·s with a stainless steel knife having a 3.8 J blade to thus obtain an airbag base fabric having a resin-coating amount of 8.6 g/m². Here, the 3.8 J blade is a blade that is rounder and less sharp than the sharp blade. When the 3.8 J blade is used, the resin-coating amount can be made higher than that of a case using the sharp blade. The airbag base fabric after the coating was thermally treated at 150°C for 60 seconds using a pin tenter dryer. The surface of the airbag base fabric of the resin layer side after the thermal treatment was the same as that shown in FIG. 4, and exposure of the fibers forming the base fabric main body from the resin layer was not observed.

### (Example 3)

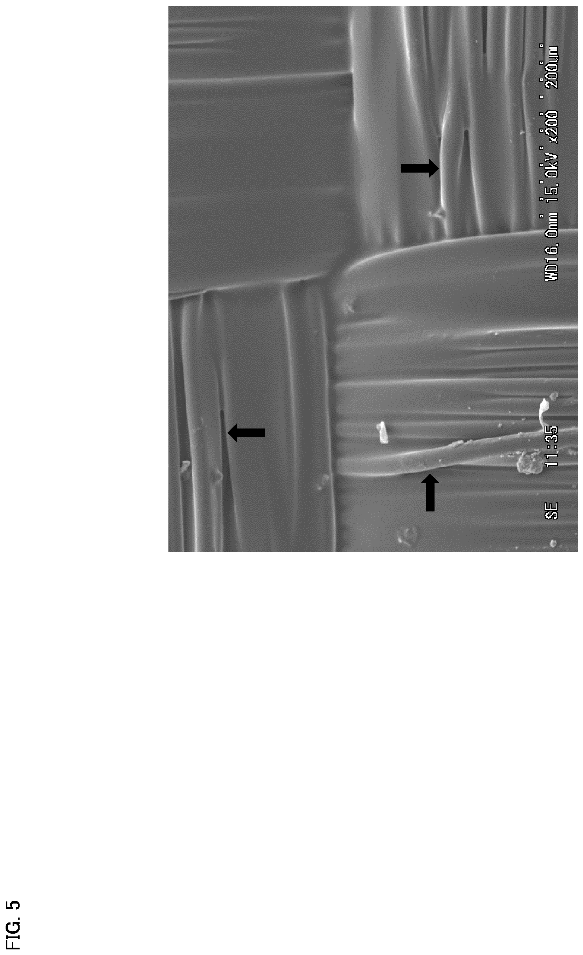

An operator placed a base fabric main body which was subjected to water-repellent process on a urethane bed (stage) and coated the top surface of the base fabric main body with a polyester resin having a viscosity of 30000 mPa·s with a stainless steel knife having a sharp blade to thus obtain an airbag base fabric having a resin-coating amount of 5.4 g/m². The airbag base fabric after the coating was thermally treated at 150°C for 60 seconds using a pin tenter dryer. The surface of the airbag base fabric of the resin layer side after the thermal treatment was as shown in FIG. 5, and exposure of the fibers forming the base fabric main body from the resin layer was not observed.

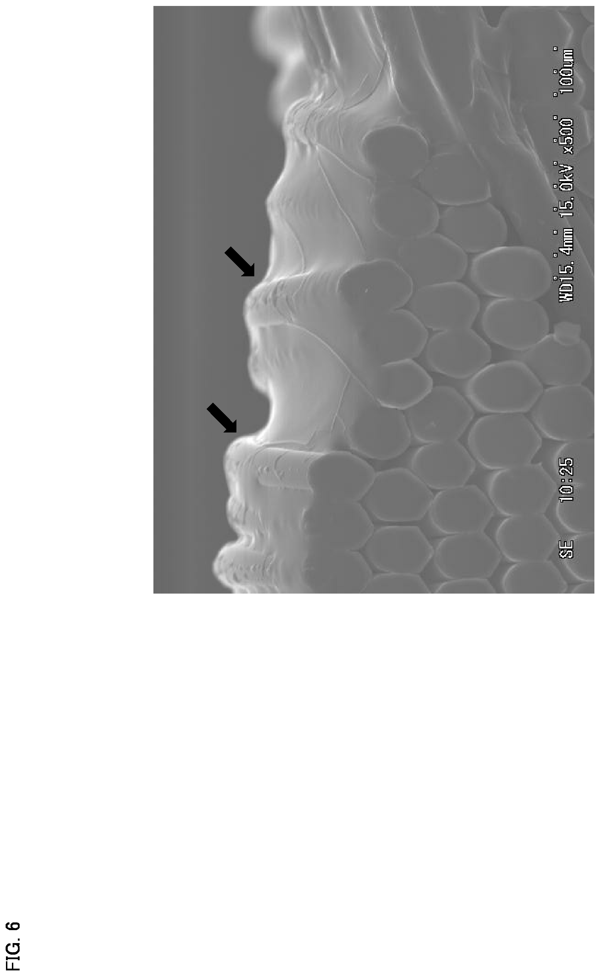

Here, it seems as if the fiber forming the base fabric main body was exposed from the resin layer at the parts indicated with the arrows in FIG. 5. However, as shown in FIG. 6, which is a cross-section picture of the airbag base fabric of same Example 3, the resin layer is indeed on the fibers forming the base fabric main body, and the fibers are not exposed. The parts where the fibers seem to be exposed in FIG. 5 are parts where the shape of the fiber under the resin layer is visible from the surface of the resin layer, as in the parts indicated with the arrows in FIG. 6.

### (Example 4)

An operator placed a base fabric main body which was subjected to water-repellent process on a urethane bed (stage) and coated the top surface of the base fabric main body with a polyester resin having a viscosity of 30000 mPa·s with a stainless steel knife having a 3.8 J blade to thus obtain an airbag base fabric having a resin-coating amount of 9.1 g/m². The airbag base fabric after the coating was thermally treated at 150°C for 60 seconds using a pin tenter dryer. The surface of the airbag base fabric of the resin layer side after the thermal treatment was the same as that shown in FIG. 5, and exposure of the fibers forming the base fabric main body from the resin layer was not observed.

### (Comparative Example 1)

An operator placed a base fabric main body on a urethane bed (stage) and coated the top surface of the base fabric main body with a silicone resin having a viscosity of 30000 mPa·s with a stainless steel knife having an extremely sharp blade to thus obtain an airbag base fabric having a resin-coating amount of 9.8 g/m². Here, the extremely sharp blade is a blade that is sharper than the sharp blade. The airbag base fabric after the coating was thermally treated at 170°C for 80 seconds using a pin tenter dryer. Exposure of the fibers forming the base fabric main body from the resin layer could be observed.

### (Comparative Example 2)

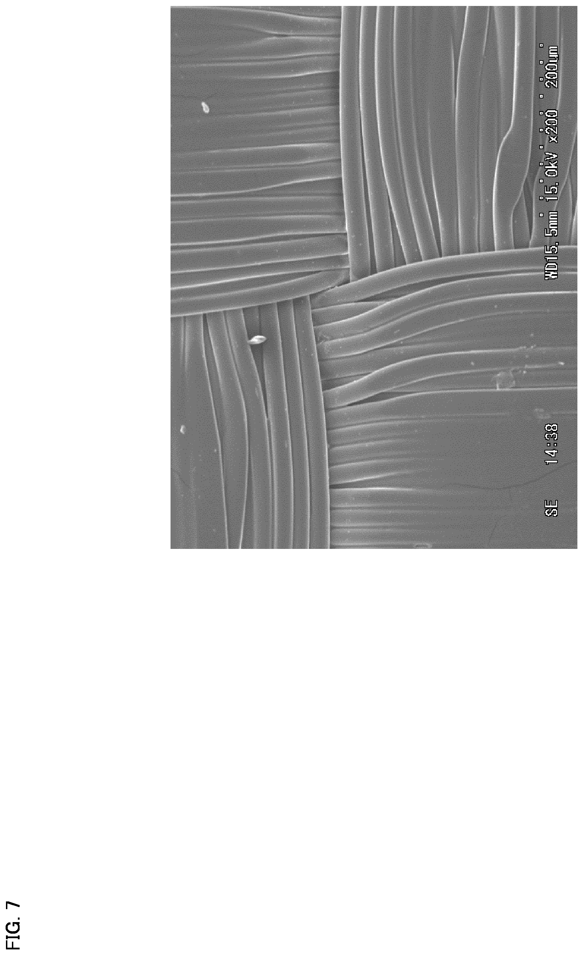

An operator placed a base fabric main body on a urethane bed (stage) and coated the top surface of the base fabric main body with a polyester resin having a viscosity of 30000 mPa·s with a stainless steel knife having a sharp blade to thus obtain an airbag base fabric having a resin-coating amount of 3.7 g/m². The airbag base fabric after the coating was thermally treated at 150°C for 60 seconds using a pin tenter dryer. The surface of the airbag base fabric of the resin layer side after the thermal treatment was as shown in FIG. 7, and the fibers forming the base fabric main body were exposed.

### (Comparative Example 3)

An operator placed a base fabric main body on a glass bed (stage) and coated the top surface of the base fabric main body with a polyester resin having a viscosity of 30000 mPa·s using an exclusive applicator (coating device) to thus obtain an airbag base fabric having a resin-coating amount of 25.0 g/m². Here, the applicator is a device which can apply a thick resin on a base fabric main body. The airbag base fabric after the coating was thermally treated at 150°C for 60 seconds using a pin tenter dryer. On the surface of the airbag base fabric of the resin layer side after the thermal treatment, exposure of the fibers forming the base fabric main body from the resin layer was not observed.

### (Comparative Example 4)

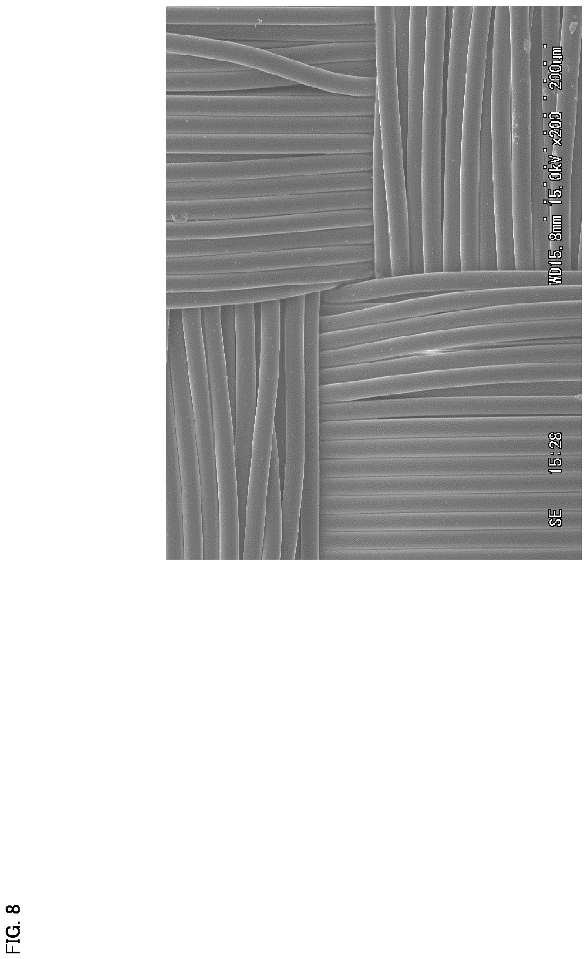

An operator placed a base fabric main body on a urethane bed (stage) and coated the top surface of the base fabric main body with a polyester resin having a viscosity of 12000 mPa·s with a stainless steel knife having a 3.8 J blade to thus obtain an airbag base fabric having a resin-coating amount of 9.5 g/m². The airbag base fabric after the coating was thermally treated at 150°C for 60 seconds using a pin tenter dryer. The surface of the airbag base fabric of the resin layer side after the thermal treatment was as shown in FIG. 8, and the fibers forming the base fabric main body were exposed.

### (Measurement Method of Air Permeation Amount)

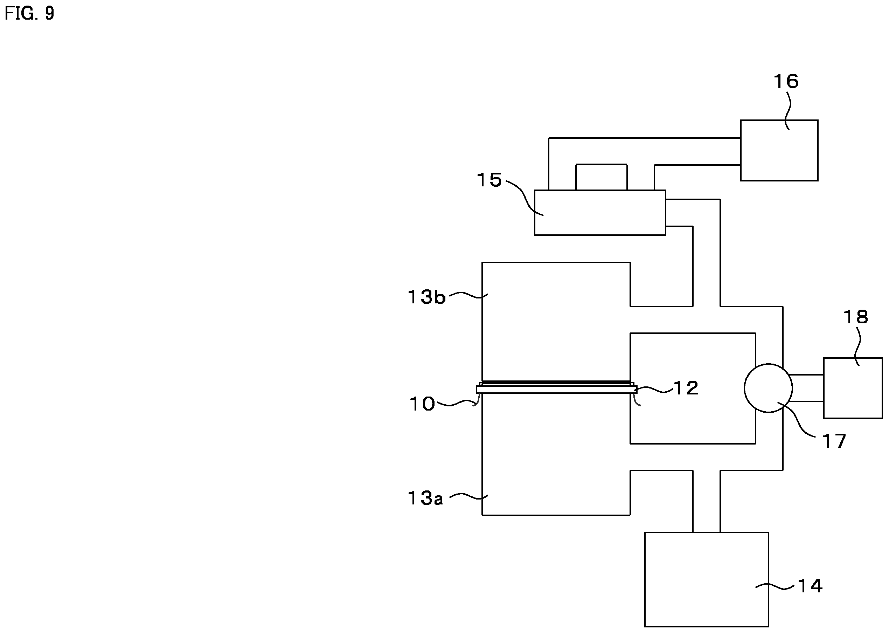

The air permeation amounts at a differential pressure of 20 kPa were measured with a raw fabric air permeation amount measurement apparatus manufactured by KYOTOSEIKO CO., LTD. illustrated in FIG. 9. To the raw fabric air permeation amount measurement apparatus in FIG. 9, DF2810P manufactured by COSMO INSTRUMENTS CO., LTD. as a flowmeter 16, LF2-100L manufactured by COSMO INSTRUMENTS CO., LTD. as a laminar flow tube 15, and DP-330BA manufactured by COSMO INSTRUMENTS CO., LTD. as a pressure gauge 18 are attached. The operator fixed a sample 10 of 20 cm × 20 cm which was cut out of the airbag base fabric to a cylindrical first clamp 13a having an inner diameter of 50 mm connected to a pressure device 14 with a ring-shaped fastener 12 and held the sample between the cylindrical first clamp 13a and a cylindrical second clamp 13b having an inner diameter of 50 mm connected to the laminar flow tube 15. Then, the operator applied pressure with the pressure device 14 from the first clamp 13a side and operated a pressure adjustment valve 17 in such a manner that the pressure indicated on the pressure gauge 18 became 20 kPa. In the pressurized state, the amount of the air passing through the sample was detected with the flowmeter 16 connected to the laminar flow tube 15 and used as the air permeation amount at a differential pressure of 20 kPa.

### (Measurement Method of Bending Resistance)

The bending resistances were measured as the indentation resistance values of an autograph tester. Specifically, an operator placed a sample of 100 mm × 100 mm which was cut out of the airbag base fabric on an iron plate having a hole with a size of 20 mm × 20 mm, pressed the sample into the hole with a round bar having a diameter of 12 mm and measured the resistance value.

The measurement results of the Examples are summarized in Table 1, and the measurement results of the Comparative Examples are summarized in Table 2. All the Examples had excellent air permeation amount and excellent bending resistances while the air permeation amount and/or the bending resistances of the Comparative Examples were inferior to those of the Examples.

**[Table 1]**

| | Ex. 1 | Ex. 2 | Ex. 3 | Ex. 4 |
|---|---|---|---|---|
| Water-Repellent Treatment before Resin Coating | Without | Without | With | With |
| Kind of Coated Resin | Polyester | Polyester | Polyester | Polyester |
| Viscosity (mPa·s) of Coated Resin | 30000 | 30000 | 30000 | 30000 |
| Thermal Treatment after Coating | 150°C, 60 seconds | 150°C, 60 seconds | 150°C, 60 seconds | 150°C, 60 seconds |
| Resin-Coating Amount (g/m²) | 4.6 | 8.6 | 5.4 | 9.1 |
| Air Permeation Amount (L/ (cm²·min)) | 0.01 | 0.01 | 0.01 | 0.01 |
| Bending Resistance (N) | 2.3 | 3.3 | 3.4 | 3.5 |

**[Table 2]**

| | Comp. Ex. 1 | Comp. Ex. 2 | Comp. Ex. 3 | Comp. Ex. 4 |
|---|---|---|---|---|
| Water-Repellent Treatment before Resin Coating | Without | Without | Without | Without |
| Kind of Coated Resin | Silicone | Polyester | Polyester | Polyester |
| Viscosity (mPa·s) of Coated Resin | 30000 | 30000 | 30000 | 12000 |
| Thermal Treatment after Coating | 150°C, 80 seconds | 150°C, 60 seconds | 150°C, 60 seconds | 150°C, 60 seconds |
| Resin-Coating Amount (g/m²) | 9.8 | 3.7 | 25.0 | 9.5 |
| Air Permeation Amount (L/ (cm²·min) ) | 0.05 | 0.03 | 0 | 0.62 |
| Bending Resistance (N) | 2.3 | 2.2 | 7.4 | 5.9 |

The above embodiments can be changed in various manners.

For example, the resin layer may be provided on both surfaces of the base fabric main body. When the resin layer is provided on both surfaces of the base fabric main body, it is sufficient that, on at least one surface, the amount of the polyester resin is 4.0 g/m² or more and less than 10.0 g/m², and the fibers are not exposed from the resin layer.

### Reference Signs List

- 1:: airbag base fabric
- 2:: base fabric main body
- 2a:: yarn
- 3:: resin layer
- 10:: sample
- 12:: fastener
- 13a:: first clamp
- 13b:: second clamp
- 14:: pressure device
- 15:: laminar flow tube
- 16:: flowmeter
- 17:: pressure adjustment valve
- 18:: pressure gauge

## Claims

1. An airbag base fabric comprising a base fabric main body and a resin layer provided on at least one surface of the base fabric main body,
wherein the base fabric main body comprises polyethylene terephthalate fibers,
the resin layer comprises a polyester resin, and
the resin layer is provided in such a manner that the amount of the polyester resin is 4.0 g/m² or more and less than 10.0 g/m² on the surface of the base fabric main body and provided in a state in which the fibers are not exposed on the surface of the resin layer side.

2. The airbag base fabric according to claim 1, wherein the air permeation amount at a differential pressure of 20 kPa is 0.01 L/(cm²·min) or less.

3. The airbag base fabric according to claim 1 or 2, wherein the bending resistance is 7 N or less.

4. The airbag base fabric according to claim 1 or 2, wherein the melting point of the polyester resin forming the resin layer is lower than the melting point of the polyethylene terephthalate fibers forming the base fabric main body.

5. The airbag base fabric according to claim 1 or 2, wherein the base fabric main body has been subjected to water-repellent process.

6. The airbag base fabric according to claim 1 or 2, wherein the ratio of the weight of the polyester resin that has penetrated into the base fabric main body to the weight of the polyester resin applied to the base fabric main body is less than 70%.

7. The airbag base fabric according to claim 1 or 2, wherein the base fabric main body is a plain weave fabric.

8. The airbag base fabric according to claim 1 or 2, wherein the fineness of the yarn of the polyethylene terephthalate fibers forming the base fabric main body is 280 to 560 dtex.
